# EUROPEAN PATENT APPLICATION

(11) **EP 4 722 667 A1**
(43) Date of publication of application: **08.04.2026**
(21) Application number: 24815797.6
(22) Date of filing: 24.05.2024
(51) Int. Cl.: G01H 1/00, G01M 7/02, G21C 17/017

(54) **METHOD FOR MEASURING VIBRATION OF INTERNAL STRUCTURE OF SMALL-SCALED REACTOR VESSEL MODEL**

(30) Priority: 01.06.2023 KR 20230070654
(71) Applicant: Korea Hydro & Nuclear Power Co., Ltd, Gyeongju-si, Gyeongsangbuk-do 38120 (KR); Doosan Enerbility Co., Ltd., Seongsan-gu Changwon-si, Gyeongsangnam-do 51711 (KR)
(72) Inventor: KIM, Kyu Hyung, Cheongju-si, Chungcheongbuk-do 28796 (KR); KO, Do Young, Daejeon 34049 (KR); LEE, Dong Hwa, Busan 48515 (KR); KANG, Dong Soo, Changwon-si, Gyeongsangnam-do 51632 (KR); KIM, Yong Kyu, Changwon-si, Gyeongsangnam-do 51318 (KR); CHOI, Han Kwang, Changwon-si, Gyeongsangnam-do 51485 (KR)
(74) Representative: Habermann, Hruschka & Schnabel
(86) International application number: PCT/KR2024/007045
(87) International publication number: WO 2024/248421

(57) **Abstract**

The present invention relates to a method for measuring vibration of an internal structure of a small-scaled reactor vessel model, the method comprising the steps of: arranging a detachable sensor fixing unit on the internal structure; installing a vibration measurement sensor that is coupled to the sensor fixing unit and measures the vibration of the internal structure; evaluating a level of the vibration of the internal structure by using the vibration measurement sensor; and disassembling the sensor fixing unit and the vibration measurement sensor after the evaluation.

## Description

### Technical Field

The present disclosure relates to a method for measuring vibration of an internal structure of a small-scale reactor vessel model.

### Background Art

Reactor vessel internals (RVI) are subject to vibration caused by the flow of a reactor vessel coolant under both normal and transient operating conditions of a reactor vessel, and thus, should be proven to maintain their integrity and ensure safety margins throughout the entire lifespan of a nuclear power plant. To this end, vibration evaluations of the reactor vessel internals are conducted.

Conventionally, in order to conduct the vibration evaluations of the reactor vessel internals, related devices should be installed inside the reactor vessel by welding, and the measurement structures installed for safety should be removed after the measurement.

However, since the measurement structures, which cannot be removed, should maintain their integrity throughout the design life of the reactor vessel, additional evaluation of the measurement structures prior to installation inside the reactor vessel is required.

Conventionally, a small-scale reactor vessel model has been used to measure the vibration of the reactor vessel internals, but there was still a problem in that the installation of the vibration measurement sensor on the small-scale reactor vessel model is only possible through welding or installation on a complex support structure.

Additionally, it is discovered that the removal process of the vibration sensor after installation through the welding or support structure may cause some deformation and damage to the reactor vessel internals.

### Disclosure

### Technical Problem

An object of the present disclosure is to provide a method for measuring vibration of an internal structure of a small-scale reactor vessel model.

### Technical Solution

The present disclosure relates to a method for measuring vibration of an internal structure of a small-scale reactor vessel model, the method including: arranging a detachable sensor fixing unit on the internal structure; installing a vibration measurement sensor that is coupled to the sensor fixing unit and measures the vibration of the internal structure; evaluating a level of the vibration of the internal structure by using the vibration measurement sensor; and disassembling the sensor fixing unit and the vibration measurement sensor after the evaluation.

The above internal structure may include a core support barrel cylinder having a nozzle protruding outward, the sensor fixing unit may include a first bracket extending in one direction, and the first bracket may be arranged lengthwise in a height direction at a position adjacent to the nozzle.

A first fastening hole and a first sensor accommodating hole may be formed in the core support barrel cylinder, a second fastening hole corresponding to the first fastening hole and a second sensor accommodating hole corresponding to the first sensor accommodating hole may be formed in the first bracket, and the arranging of the sensor fixing unit may be performed by aligning the first bracket to the core support barrel cylinder, and tightly coupling the first bracket to the core support barrel cylinder after the aligning.

The aligning may be performed by arranging the first bracket on an inner surface of the core support barrel cylinder, and the tight coupling may be performed by using a first fixing member inserted into the first fastening hole and the second fastening hole.

The installing of the vibration measurement sensor may be performed by inserting the vibration measurement sensor through the first sensor accommodating hole and the second sensor accommodating hole, and the vibration measurement sensor may include a dynamic pressure sensor.

The evaluating of the level of the vibration may be performed by inputting data measured from the vibration measurement sensor into a data input unit, and evaluating the level of the vibration of the core support barrel cylinder through a data processing unit based on the input data.

The internal structure may include an upper guide structure including a lower support plate coupled to a control rod assembly guide tube, the sensor fixing unit may include a second bracket having a third fastening hole formed therein, and the second bracket may have one end coupled to the lower support plate and the other end coupled to the vibration measurement sensor.

The arranging of the sensor fixing unit may performed by coupling the second bracket to the lower support plate, and tightly coupling the vibration measurement sensor to the second bracket through a second fixing member inserted into the third fastening hole.

The evaluating of the level of the vibration may be performed by inputting data measured from the vibration measurement sensor into a data input unit, and evaluating the level of the vibration of the upper guide structure through a data processing unit based on the input data.

### Advantageous Effects

According to the present disclosure, the method for measuring the vibration of the internal structure of the small-scale reactor vessel model is provided.

### Description of Drawings

FIG. 1 is a flowchart illustrating a method for measuring vibration of an internal structure of a small-scale reactor vessel model according to one embodiment of the present disclosure.
FIG. 2 illustrates an internal structure according to a first embodiment of the present disclosure.
FIG. 3 is an enlarged view of a section A of FIG. 2.
FIG. 4 is a cross-sectional view taken along line B-B' of FIG. 3.
FIG. 5 illustrates a method for measuring vibration of a core support barrel cylinder according to the first embodiment of the present disclosure.
FIG. 6 illustrates an internal structure according to a second embodiment of the present disclosure.
FIG. 7 is a cross-sectional view taken along line C-C' of FIG. 6.
FIG. 8 illustrates a method for measuring vibration of an upper guide structure according to the second embodiment of the present disclosure.

### Mode for Invention

Hereinafter, the present disclosure will be described in more detail with reference to the drawings below.

The attached drawings are merely examples intended to more specifically illustrate the technical concepts of the present disclosure, and therefore, the scope of the present disclosure is not limited to the attached drawings. Furthermore, the attached drawings may exaggerate the size and spacing of components to illustrate the relationships between components.

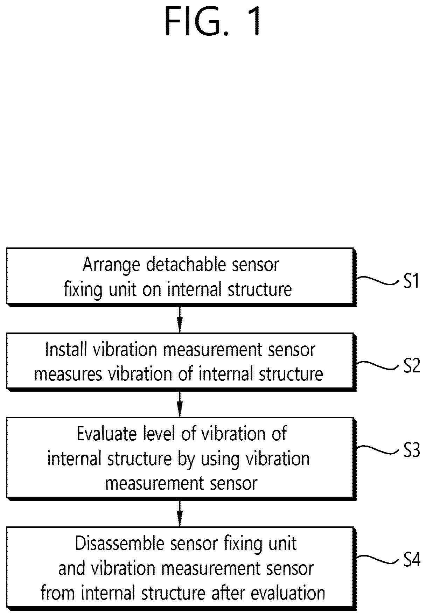

FIG. 1 is a flowchart illustrating a method for measuring vibration of an internal structure of a small-scale reactor vessel model according to one embodiment of the present disclosure.

First, a detachable sensor fixing unit is arranged on the internal structure (S1).

In the present disclosure, an internal structure S (hereinafter referred to as the "internal structure") of the small-scale reactor vessel model includes a core support barrel cylinder 100 having a nozzle protruding outward or an upper guide structure 100' including a lower support plate coupled to a control rod assembly guide tube.

Thereafter, a vibration measurement sensor that is coupled to the sensor fixing unit and measures the vibration of the internal structure is installed (S2).

In the present disclosure, the types of sensor fixing units 300 and 300' and vibration measurement sensors 400 and 400' attached to the internal structure S of the reactor scale model may vary depending on the shape of the internal structure S of the small-scale reactor vessel model, and their installation and arrangement forms may also vary. Specific installation and arrangement forms are described below.

Next, after installing the vibration measurement sensor, a level of the vibration of the internal structure is evaluated by using the vibration measurement sensor (S3).

In the present disclosure, the evaluating of the level of the vibration is performed through a step of evaluating the level of the vibration of the internal structure S through a data processing unit 600 based on data input after a step of inputting data measured from the vibration measurement sensors 400 and 400' into a data input unit 500.

Finally, after the evaluation, the sensor fixing unit and vibration measurement sensor are disassembled from the internal structure (S4).

In the present disclosure, the vibration measurement device installed and arranged varies depending on the type and shape of the internal structure S, and the vibration measurement method also varies accordingly. This will be explained through specific examples below.

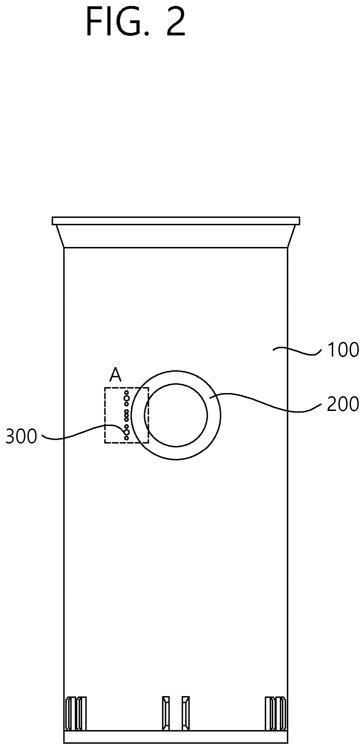

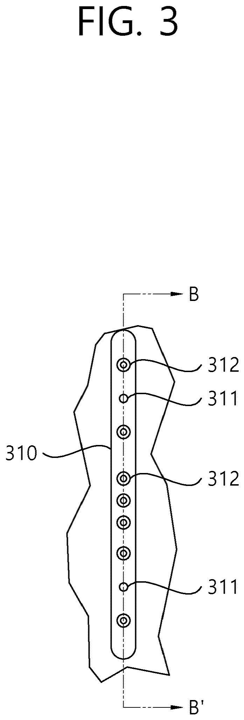

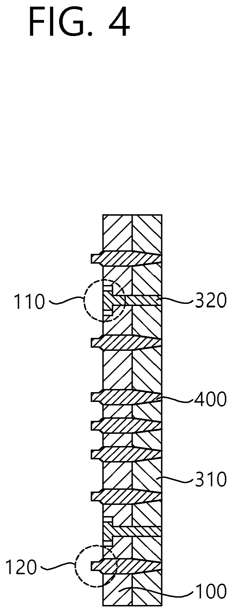

FIG. 2 illustrates the internal structure S of a small-scale reactor vessel model according to a first embodiment of the present disclosure, FIG. 3 is an enlarged view of a section A in FIG. 2, and FIG. 4 is a cross-sectional view taken along line B-B' in FIG. 3.

The internal structure S according to the first embodiment includes the core support barrel cylinder 100 having a nozzle 200 protruding outwardly.

The sensor fixing unit 300 arranged in the core support barrel cylinder 100 includes a first bracket 310 that extends long in one direction.

The first bracket 310 is arranged lengthwise in the height direction at a position adjacent to the nozzle 200.

A first fastening hole 110 and a first sensor accommodating hole 120 are formed in the core support barrel cylinder 100. A plurality of first fastening holes 110 and first sensor accommodating holes 120 may be formed, and may be arranged at regular intervals.

The first bracket 310 is formed with a second fastening hole 311 corresponding to the first fastening hole 110 and a second sensor accommodating hole 312 corresponding to the first sensor accommodating hole 120. A plurality of second fastening holes 311 and second sensor accommodating holes 312 are formed to correspond to the first fastening hole 110 and the first sensor accommodating hole 120, and may be arranged at regular intervals.

In order to tightly couple the first bracket 310 to the core support barrel cylinder 100, the first fixing member 320 is inserted into the first fastening hole 110 and the second fastening hole 311.

In the present disclosure, a fixing bolt is used as the first fixing member 320, but it is not limited thereto, and any that can be fitted into the first fastening hole 110 and the second fastening hole 311 may be used.

Installation of the vibration measurement sensor 400 in the core support barrel cylinder 100 is accomplished by inserting the vibration measurement sensor 400 into the first sensor accommodating hole 120 and the second sensor accommodating hole 312, and the vibration measurement sensor 400 here is a dynamic pressure sensor.

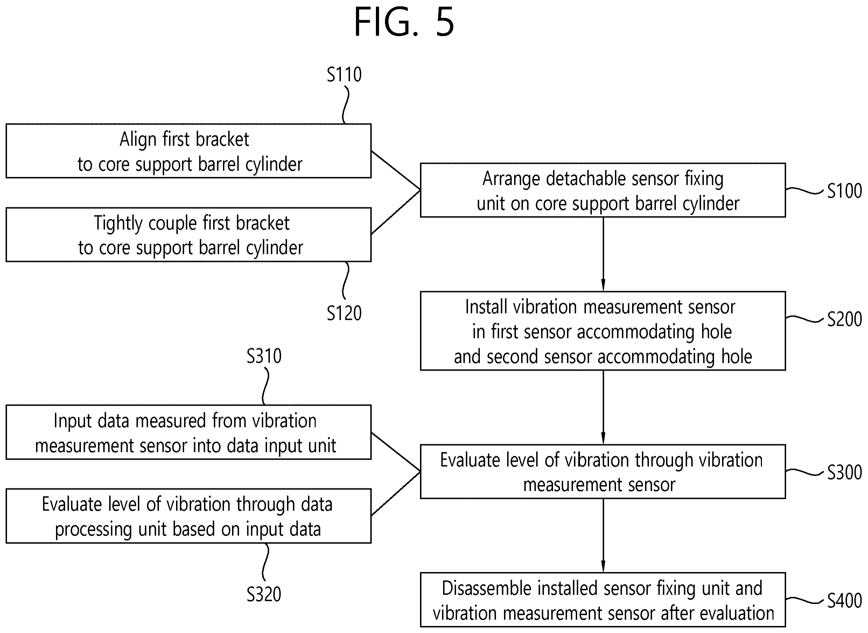

FIG. 5 illustrates a method for measuring vibration of a core support barrel cylinder according to the first embodiment of the present disclosure.

First, the detachable sensor fixing unit 300 is arranged on the core support barrel cylinder 100 (S100).

In the arranging of the sensor fixing unit 300 on the core support barrel cylinder 100, the first bracket 310 is aligned to the core support barrel cylinder 100 (S110), and then the first bracket 310 is tightly coupled to the core support barrel cylinder 100 (S120).

The alignment (S110) here is achieved by placing the first bracket 310 on an inner surface of the core support barrel cylinder 100.

The tight coupling is performed by tightly coupling the first fastening hole 110 of the core support barrel cylinder 100 and the second fastening hole 311 of the first bracket 310 through the first fixing member 320.

Afterwards, the vibration measurement sensor 400 is installed in the first sensor accommodating hole 120 of the core support barrel cylinder 100 and the second sensor accommodating hole 312 of the first bracket 310 (S200).

Next, the level of the vibration of the core support barrel cylinder 100 is evaluated through the vibration measurement sensor 400 inserted into the first sensor accommodating hole 120 and the second sensor accommodating hole 312 (S300).

The evaluation of the level of the vibration for the core support barrel cylinder 100 is performed through a step (320) of evaluating the level of the vibration of the core support barrel cylinder 100 through the data processing unit 600 based on the input data after a step (310) of inputting data measured from a vibration measurement sensor 400 into the data input unit 500.

Finally, after the evaluation, the sensor fixing unit 300 and vibration measurement sensor 400 are disassembled from the core support barrel cylinder 100 (S400).

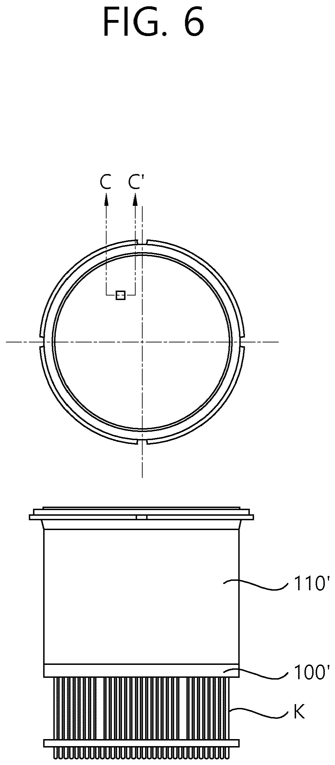

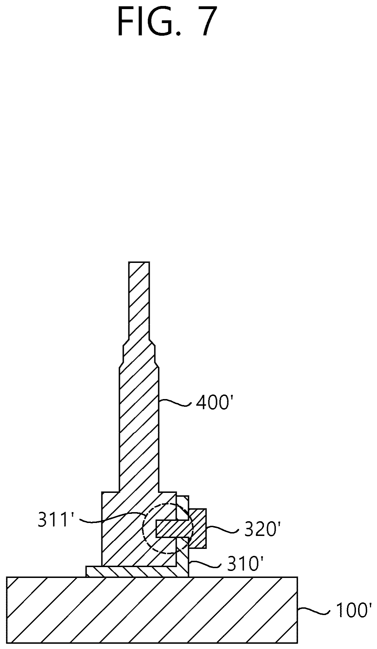

FIG. 6 illustrates an internal structure according to a second embodiment of the present disclosure, and FIG. 7 is a view taken along line C-C' of FIG. 6.

The internal structure S according to the second embodiment includes an upper guide structure 100' including a lower support plate 200' coupled to a control rod assembly guide tube K.

A sensor fixing unit 300' arranged on the upper guide structure 100' includes a second bracket 310' in which a third fastening hole 311' is formed.

The second bracket 310' has at one end coupled to the lower support plate 200' and at the other end to the vibration measurement sensor 400'.

A second fixing member 320' is inserted into the third fastening hole 311', thereby tightly coupling the vibration measurement sensor 400' and the second bracket 310'.

The installation of the vibration measurement sensor 400' in the upper guide structure 100' is accomplished by inserting the vibration measurement sensor 400 into the third fastening hole 311', and the vibration measurement sensor 400' here is an acceleration sensor.

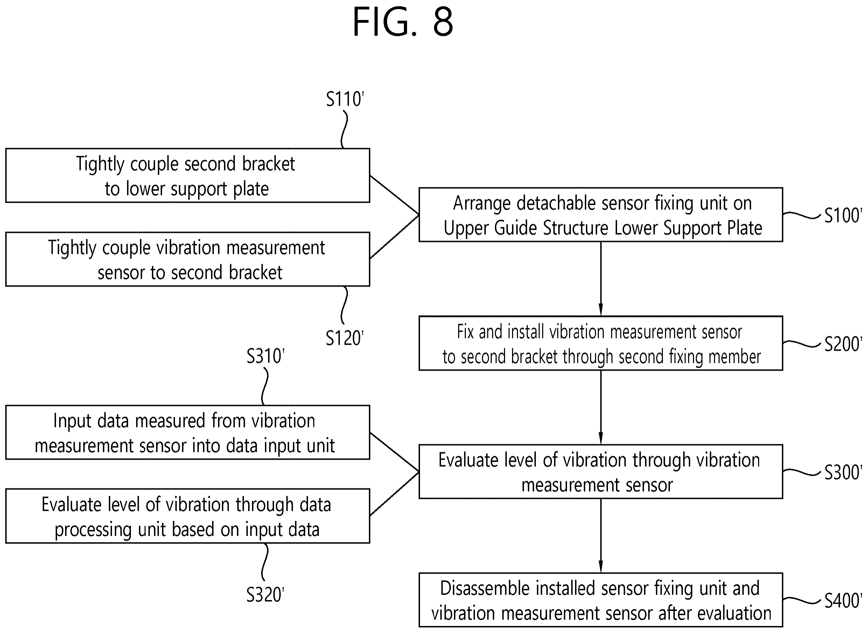

FIG. 8 illustrates a method for measuring vibration of an upper guide structure according to a second embodiment of the present disclosure.

First, the detachable sensor fixing unit 300' is arranged on the upper guide structure 100' (S100').

First, in order to arrange the sensor fixing unit 300' on the upper guide structure 100', the second bracket 310' is tightly coupled to the lower support plate 200' (S110'). Thereafter, the vibration measurement sensor 400' is tightly coupled to the second bracket 310' (S120').

Next, the vibration measurement sensor 400' is stably fixed (installed) to the second bracket 310' through the second fixing member 320' inserted into the third fastening hole 311' (S200').

Thereafter, the level of the vibration of the upper guide structure 100' is evaluated through the vibration measurement sensor 400' inserted into the third fastening hole 311' (S300').

The evaluating the level of the vibration for the upper guide structure 100' is performed through a step (320') of evaluating the level of the vibration of the upper guide structure 100' through the data processing unit 600 based on the input data after a step (310') of inputting data measured from the vibration measurement sensor 400' into the data input unit 500.

Finally, after the evaluation, the sensor fixing unit 300' and vibration measurement sensor 400' are disassembled from the upper guide structure 100' (S400').

According to the present disclosure, when measuring the vibration of the internal structures of various small-scale reactor vessel models, it is possible to easily measure the vibration through the installation of the sensor fixing units and vibration measurement sensors according to the type and shape of the internal structure. Furthermore, since the fixing units and sensors can be easily attached to or detached the internal structure, it is possible to prevent deformation of durable structures that occurred by separately welding sensors for conventional vibration measurements.

The above-described examples serve as illustrative examples of the present disclosure and are not intended to limit the scope of the present disclosure. Those skilled in the art will readily appreciate the potential for various modifications and implementations of the present disclosure. Therefore, the scope of technical protection of the present disclosure should be defined by the appended claims.

## Claims

1. A method for measuring vibration of an internal structure of a small-scale reactor vessel model, the method comprising:
arranging a detachable sensor fixing unit on the internal structure;
installing a vibration measurement sensor that is coupled to the sensor fixing unit and measures the vibration of the internal structure;
evaluating a level of the vibration of the internal structure by using the vibration measurement sensor; and
disassembling the sensor fixing unit and the vibration measurement sensor after the evaluation.

2. The method of claim 1, wherein the internal structure includes a core support barrel cylinder having a nozzle protruding outward,
the sensor fixing unit includes a first bracket extending in one direction, and
the first bracket is arranged lengthwise in a height direction at a position adjacent to the nozzle.

3. The method of claim 2, wherein a first fastening hole and a first sensor accommodating hole are formed in the core support barrel cylinder, a second fastening hole corresponding to the first fastening hole and a second sensor accommodating hole corresponding to the first sensor accommodating hole are formed in the first bracket, and
the arranging of the sensor fixing unit is performed by
aligning the first bracket to the core support barrel cylinder, and
tightly coupling the first bracket to the core support barrel cylinder after the aligning.

4. The method of claim 3, wherein the aligning is performed by arranging the first bracket on an inner surface of the core support barrel cylinder, and
the tight coupling is performed by using a first fixing member inserted into the first fastening hole and the second fastening hole.

5. The method of claim 3, wherein the installing of the vibration measurement sensor is performed by inserting the vibration measurement sensor through the first sensor accommodating hole and the second sensor accommodating hole, and
the vibration measurement sensor includes a dynamic pressure sensor.

6. The method of claim 2, wherein the evaluating of the level of the vibration is performed by
inputting data measured from the vibration measurement sensor into a data input unit, and
evaluating the level of the vibration of the core support barrel cylinder through a data processing unit based on the input data.

7. The method of claim 1, wherein the internal structure includes an upper guide structure including a lower support plate coupled to a control rod assembly guide tube,
the sensor fixing unit includes a second bracket having a third fastening hole formed therein, and
the second bracket has one end coupled to the lower support plate and the other end coupled to the vibration measurement sensor.

8. The method of claim 7, wherein the arranging of the sensor fixing unit is performed by
coupling the second bracket to the lower support plate, and
tightly coupling the vibration measurement sensor to the second bracket through a second fixing member inserted into the third fastening hole.

9. The method of claim 7, wherein the evaluating of the level of the vibration is performed by
inputting data measured from the vibration measurement sensor into a data input unit, and
evaluating the level of the vibration of the upper guide structure through a data processing unit based on the input data.
